# EUROPEAN PATENT APPLICATION

(11) **EP 2 174 983 A1**
(43) Date of publication of application: **14.04.2010**
(21) Application number: 08790129.4
(22) Date of filing: 02.07.2008
(51) Int. Cl.: C08L 45/00, B05D 1/40, B29C 59/02, C08K 5/01

(54) **RESIN SOLUTION FOR THERMAL IMPRINT, RESIN THIN FILM FOR THERMAL IMPRINT, METHODS FOR PRODUCTION OF THE RESIN SOLUTION AND THE RESIN THIN FILM**

(30) Priority: 04.07.2007 JP 2007175962
(71) Applicant: Maruzen Petrochemical CO., LTD., Tokyo 104-8502 (JP); Scivax Corporation, Kanagawa 2130012 (JP)
(72) Inventor: TAKAYA, Yoshiaki, Ichihara-shi Chiba 290-0045 (JP); SATSUKA, Takuro, Ichihara-shi Chiba 290-0045 (JP); NAGAI, Go, Ichihara-shi Chiba 290-0045 (JP); HAYASHIDA, Yoshihisa, Ichihara-shi Chiba 290-0045 (JP); KUSUURA, Takahisa, Kawaski-shi Kanagawa 213-0012 (JP); MITRA, Anupam, Kawaski-shi Kanagawa 213-0012 (JP)
(74) Representative: Gille Hrabal Struck Neidlein Prop Roos
(86) International application number: PCT/JP2008/001730
(87) International publication number: WO 2009/004795

(57) **Abstract**

There are provided a resin solution substantially applicable to thermal imprinting, a thin film thereof, and manufacturing methods of those. A thermal imprinting resin solution for forming a thin film used for thermal imprinting applications comprises a thermoplastic resin and greater than or equal to at least one kind of solvent which can dissolve the resin, and an containing amount of foreign particles having a grain diameter larger than or equal to 0.2 µm is controlled to be less than 3000 particles/cm³. Moreover, remaining volatile compositions in a thin film are set to be less than or equal to 0.25 % when the thin film is formed from the thermal imprinting resin solution.

## Description

### Technical Field

The present invention relates to a thermoplastic-resin solution suitable for thermal imprinting applications, a thin film formed of the resin solution and manufacturing methods of those.

### Background Art

It becomes requisite for optical resin materials to ensure both performances and costs in accordance with the significant development of various optical device fields including optical communications, optical disks, displays and optical sensors and the like. In fields of biochips and microreactors, expectations for transparent resin materials which are easy to process in various forms are growing instead of glasses. In both fields, processes of a surface of a base material, in particular, microfabrication becomes requisite, and such microfabrication technologies nowadays become important technologies in the field of semiconductors in which integration is remarkably advanced.

Conventionally, adopted to form a fine pattern on a surface of a transparent material are a method of mechanically cutting the surface or a method of printing the pattern thereon using a resist, or a thermal, ultraviolet, or electron beam curing resin. However, mechanical cutting has a problem that highly-advanced and cumbersome processing technology is requisite, and pattern printing using a resist has problems such that steps thereof are complicated and the durability is poor due to peeling of the printed pattern. Moreover, together with refinement of the pattern, mechanisms which can control the whole process highly precisely become requisite, so that the issue of cost in various device manufacturing became nonnegligible. In particular, in the fields of various devices, in accordance with reduction of the size of an apparatus and of the weight thereof, there is a strong demand for resins thinned so as to improve the integration density and to reduce the size. Various pattern forming methods of the thin film resins are studied, and as a method of forming a fine pattern at low cost, there is proposed a thermal imprinting method (see, for example, Patent Literature 1).

That is, it is a method of pressing a mold which has a fine pattern and which is heated to a temperature greater than or equal to the glass-transition temperature of a resin on the surface of the resin, and of transferring the fine pattern of the mold on the melted resin surface. However, as such resin base materials, films having a thickness of 300 µm or so can be formed through injection molding because of current development of technologies, but further thinning of the base material is desired for various devices and various optical elements that further reduction in size and further thinning are requisite, and a resin solution for enabling pattern formation on a sheet or a film by thermal imprinting and a method of manufacturing a thin film thereof become necessary.

Conventionally, a (metha) acrylate resin represented by polymethacrylic acid (PMMA) or a polycarbonate resin are used as such resins, but such resins have problems in heat resistance and in dimension change due to water absorption, and it is difficult to control the balance between the flowability and solidification, so that it is difficult to maintain and to use the highly-transferred pattern.

In contrast, there is known a cycle olefin-based thermoplastic resin as a resin which has both heating resistance and dimensional stability because of the low water absorption rate. In general, the cycle olefin-based thermoplastic resin has good transparency, chemical resistance and low hygroscopicity, has the heat resistance which can be easily controlled through the structure of the cyclic olefins or the contained amount thereof in the resin, and has a low viscosity, a short relaxation time, hardly adheres to a mold, and has a good transferring precision of a fine pattern, so that application of such a resin as a thermal imprinting resin with a good productivity is anticipated. Moreover, the cycle olefin-based thermoplastic resin has a good solubility with various solvents, and is a very favorable material in formation of a thin film having an arbitrary film thickness.

For example, there is known a method of casting a thermoplastic-resin solution on a base and of manufacturing a self-supporting optical film (see, for example, Patent Literature 2), but the object of such a method is to manufacture an optical film which has a wider angle-of-view characteristic, so that microfabrication of the surface of the resin is not mentioned in the literature.

Furthermore, there is known a method of mixing an organic solvent or a silane compound as a plasticity-giving material with a resin, and of processing a film surface (see, for example, Patent Literature 3), but the literature exemplifies only a film having a high possibility that a volatile constituent remains, and it is not appropriate for manufacturing of a film that can be used in a thermal imprinting process which is an object of the present invention.

Because resins cannot be used for the thermal imprinting application unless the surface condition of the resin after thin-film formation is smooth, management for suppressing various contaminations like foreign particles is necessary. In fact, when a thin film is simply formed from a resin solution, particle-like foreign materials are observed on the surface of the resin, and only a thin film which is not appropriate for thermal imprinting can be manufactured in most cases. For example, there is known a method of producing a pellet from a resin solution filtrated by a filter having a charge capturing characteristic, and of forming a carrier plastic casing with little possibilities of foreign particles production by injection molding (see, for example, Patent Literature 4). However, regarding formation of a thin film suitable for thermal imprinting is not mentioned at all.

In addition, regarding manufacturing of cellulose acylate film, there is proposed a multistage filtrating process having a heating mechanism as a filtration method of a resin solution (see, for example, Patent Literature 5). This is a technique of performing filtering with the resin-solution viscosity being reduced by heating to reduce the load of the filtration steps, and is already adopted in the filtration process. Even in this case, however, a resin solution for forming a resin thin film in consideration of thermal imprinting is not mentioned.

In contrast, there are literatures (see, for example, non-patent literatures 1, 2) which disclose that TOPA8007 (Tg = 80 °C) is used as a thermoplastic cyclic olefin-based resin, and is dissolved in toluene to form a thin film on an Si wafer, but there is no description about information necessary for application of a thermal imprinting process, such as how to adjust a resin solution, the resin surface flatness of a thin film, and remaining volatile compositions in a thin film, and there remains a large question about how to apply the foregoing resin to the process in practice. In fact, particle-like materials are present on a surface of the thin film even though such a resin is dissolved in a toluene solution and is directly used, and furthermore, film thicknesses become nonuniform and waviness is produced on a surface of the resin, so that it is difficult to apply such a resin to a practical thermal imprinting process.

Patent Literature 1: U. S. Patent No. 5772905
Patent Literature 2: JP2001-194532A
Patent Literature 3: JP2006-205723A
Patent Literature 4: JPH10-60048A
Patent Literature 5: JP2005-272845
Non-patent literature 1: Journal of Micro mechanics and Microengineering, vol: 15, issue: 2, pages: 296-300, 2005
Non-patent literature 2: Materials Science & Engineering C (Volume 23, Issue 1-2, pages 23-31) journal on 15th January 2003

### Disclosure of Invention

### Problems to be solved by the invention

As described above, it is essential to apply a thermal imprinting process and to manufacture a resin thin film applicable to the process in order to manufacture various devices with a fine pattern at low cost, but it is hardly studied so far about a resin solution for forming a resin thin film and the thin film thereof in practice.

In view of the foregoing problems, it is an object of the invention to provide a resin solution which can be substantially applied to thermal imprinting processes, a thin film thereof, and manufacturing methods of those.
Means for solving the problems

The present invention relates to a thermal-imprinting resin solution for forming a thin film used for thermal imprinting, the thermal-imprinting resin solution comprises: a thermoplastic resin; and greater than or equal to at least one kind of solvent which can dissolve the thermoplastic resin, and wherein an containing amount of foreign particles each having a grain diameter larger than or equal to 0.2 µm is less than 3000 particles/cm³.

More specifically, the thermal-imprinting resin solution comprises: a thermoplastic resin containing at least one kind of skeleton in a formula (1) or in a formula (2) in a main chain; and greater than or equal to at least one kind of solvent which can dissolve the thermoplastic resin, and wherein an containing amount of foreign particles each having a grain diameter larger than or equal to 0.2 µm is less than 3000 particles/cm³. 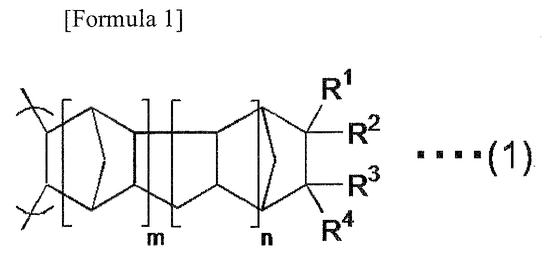 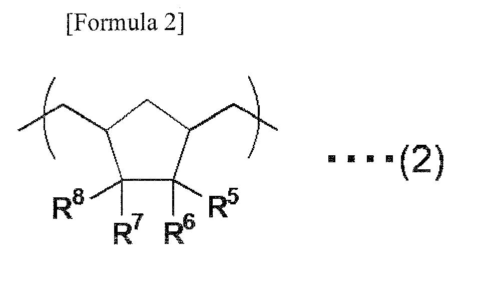 (R¹, R², R³, R⁴, R⁵, R⁶, R⁷, and R⁸ in the formulae (1), (2) can be different or identical, and each of these is a substituent group containing hydrogen atoms, deuterium atoms, hydrocarbon groups having a carbon number of 1 to 15, halogen atoms, or hetero atoms, such as oxygen or sulfur, and those may mutually form a ring structure. m and n are integers greater than or equal to 0)

Moreover, a thermal-imprinting resin solution of the present invention is to be used to form a thin film substantially appropriate for thermal imprinting applications, and wherein the resin solution is acquired by filtration using a filter having apertures each smaller than 0.8 µm.

Furthermore, a copolymer of cyclic olefin in a formula (3) and α-olefin, or a polymer produced by hydrogenation after ring-opening polymerization of the cyclic olefin can be used as the thermoplastic resin. 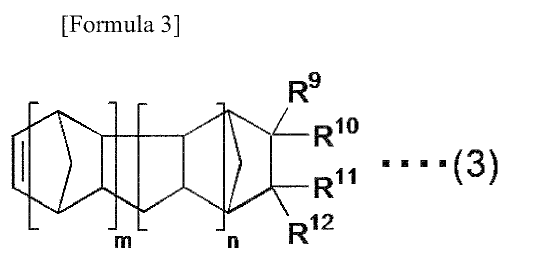 (R⁹, R¹⁰, R¹¹, and R¹² in the formula (3) can be different or identical, and each of these is a substituent group containing hydrogen atoms, deuterium atoms, hydrocarbon groups having a carbon number of 1 to 15, halogen atoms, or hetero atoms, such as oxygen or sulfur, and those may mutually form a ring structure. m and n are integers greater than or equal to 0)

In addition, with regard to the solvent, the solvent can be one kind selected from followings: an aromatic solvent; a hydrocarbon solvent; and a halogen solvent, or can be a mixed solvent of greater than or equal to two kinds of these solvents.

Moreover, a method of manufacturing a thermal-imprinting resin solution of the present invention is to form a thin film used for thermal imprinting, and the method comprises: dissolving a thermoplastic resin in greater than or equal to at least one kind of solvent which can dissolve the thermoplastic resin; and filtrating the solvent using a filter having apertures each smaller than 0.8 µm.

In this case, it is preferable that the thermoplastic resin should contain at least one kind of skeleton in a formula (1) or in a formula (2) in a main chain. 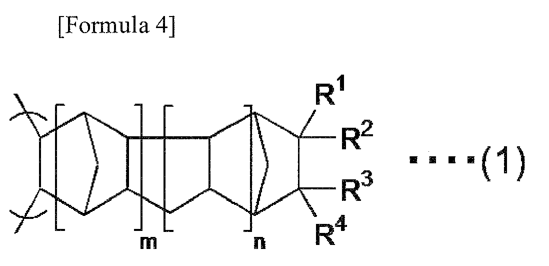 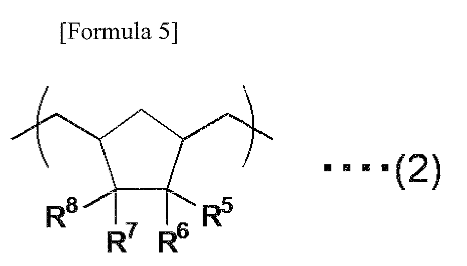 (R¹, R², R³, R⁴, R⁵, R⁶, R⁷, and R⁸ in the formulae (1), (2) can be different or identical, and each of these is a substituent group containing hydrogen atoms, deuterium atoms, hydrocarbon groups having a carbon number of 1 to 15, halogen atoms, or hetero atoms, such as oxygen or sulfur, and those may mutually form a ring structure. m and n are integers greater than or equal to 0)

Moreover, it is preferable that the thermoplastic resin in the formula (1) or in the formula (2) should be contained in the thermal-imprinting resin solution at 0.1 % by weight to 30 % by weight.

In addition, with regard to the solvent, the solvent can be one kind selected from followings: an aromatic solvent; a hydrocarbon solvent; and a halogen solvent, or can be a mixed solvent of greater than or equal to two kinds of these solvents.

Furthermore, a thermal-imprinting resin thin film of the present invention is manufactured from the foregoing thermal-imprinting resin solution of the present invention.

In this case, it is preferable that remaining volatile compositions in the thin film should be less than or equal to 0.25 % from the standpoint of thermal imprinting processes. A film thickness can be formed at 10 nm to 40 µm.

Moreover, a method of manufacturing a thermal-imprinting resin thin film of the present invention comprises: applying the foregoing thermal-imprinting resin solution of the present invention on a supporting base material; and drying the resin solution until remaining volatile compositions in the thin film become less than or equal to 0.25 %.

In addition, the effect of the present invention becomes significantly apparent when a film thickness of the thin film is 10 to 4000nm, and the thin film is formed by spin coating.

### Effect of the invention

A resin solution of the present invention allows manufacturing of a thin film appropriate for thermal imprinting when used in an application of thermal imprinting. Moreover, it becomes possible to manufacture a thin film for thermal imprinting which ensures the uniformity of the thin film surface and thereinside by controlling the content of foreign particles in the resin solution, and which allows a pattern to be transferred uniformly.

Moreover, a thin film manufactured from the thermal imprinting resin solution of the present invention controls remaining volatile compositions to be at least less than or equal to 0.25 %, so that it is possible to suppress any foam formation phenomenon due to vaporization of the remaining volatile compositions during thermal imprinting, and to enable uniform transferring.

### Best Mode for Carrying Out the Invention

A thermoplastic resin used in the present invention is not limited to any particular one if it is appropriate for thermal imprinting applications, but in particular, is a copolymer of cyclic olefins and α-olefins, i.e. a copolymer with α-olefin having a recurring unit derived from a cyclic olefins represented by the following formula (1), or a polymer to which hydrogen is added after ring-opening polymerization of cyclic olefins represented by the following formula (2).

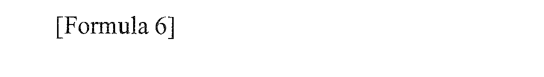

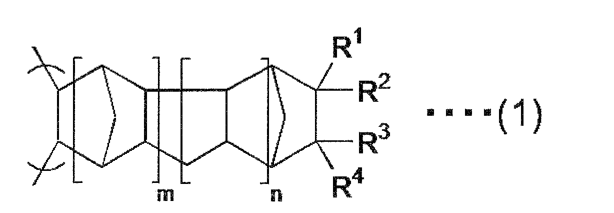

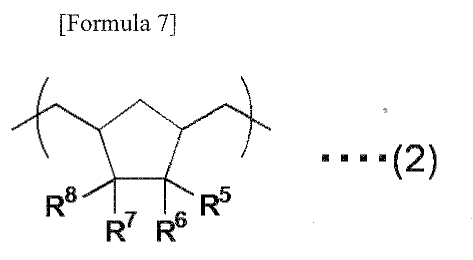

R¹, R², R³, R⁴, R⁵, R⁶, R⁷, and R⁸ in the formulae (1), (2) can be different or identical, and each of these is a substituent group containing hydrogen atoms, deuterium atoms, hydrocarbon groups having a carbon number of 1 to 15, halogen atoms, or hetero atoms, such as oxygen or sulfur, and those may mutually form a ring structure. Note that m and n are integers each greater than or equal to 0.

A cyclic olefin monomer constituting the resin has a structure represented by the formula (3), and examples of such a preferable monomer are bicyclo [2, 2, 1] hept-2-ene (norbornene), 5-methylbicyclo [2, 2, 1] hept-2-ene, 7-methylbicyclo [2, 2, 1] hept-2-ene, 5-ethylbicyclo [2, 2, 1] hept-2-ene, 5-propylbicyclo [2, 2, 1] hept-2-ene, 5-n-butylbicyclo [2, 2, 2] hept-2-ene, 5-isobutylbicyclo [2, 2, 1] hept-2-ene, 1,4-dimethylbicyclo [2, 2, 1] hept-2-ene, 5-bromobicyclo [2, 2, 1] hept-2-ene, 5-chlorobicyclo [2, 2, 1] hept-2-ene, 5-fluorobicyclo [2, 2, 1] hept-2-ene, 5,6-dimethylbicyclo [2, 2, 1] hept-2-ene, dicyclopentadiene, tricyclopentadiene, tetracyclo [4, 4, 0, 1^{2.5}, 1^{7.10}]-3-dodecene, 5,10-dimethyltetracyclo [4, 4, 0, 1^{2.5}, 1^{7.10}]-3-dodecene, 2,10-dimethyltetracyclo [4, 4, 0, 1^{2.5}, 1^{7.10}]-3-dodecene, 11,12-dimethyltetracyclo [4, 4, 0, 1^{2.5}, 1^{7.10}]-3-dodecene, 2,7,9-trimethyltetracyclo [4, 4, 0, 1^{2.5}, 1^{7.10}]-3-dodecene, 9-ethyl-2,7-dimethyltetracyclo [4, 4,0, 1^{2.5}, 1^{7.10}]-3-dodecene, 9-isobutyl-2,7-dimethyltetracyclo [4, 4, 0, 1^{2.5}, 1^{7.10}]-3-dodecene, 9,11,12-tlimethyltetracyclo [4, 4, 0, 1^{2.5}, 1^{7.10}]-3-dodecene, 9-ethyl-11,12-dimethyltetracyclo [4, 4, 0, 1^{2.5}, 1^{7.10}]-3-dodecene, 9-isobutyl-11,12-dimethyltetracyclo [4, 4, 0, 1^{2.5}, 1^{7.10}]-3-dodecene, 5,8,9,10-tetramethyltetracyclo [4, 4, 0, 1^{2.5}, 1^{7.10}]-3-dodecene, 8-hexyltetracyclo [4, 4, 0, 1^{2.5}, 1^{7.10}]-3-dodecene, 8-stearyltetracyclo [4, 4, 0, 1^{2.5}, 1.^{7.10}]-3-dodecene, 8-methyl-9-ethyltetracyclo [4, 4, 0, 1^{2.5}, 1^{7.10}]-3-dodecene, 8-cyclohexyltetracyclo [4, 4, 0, 1^{2.5}, 1.^{7.10}]-3-dodecene, 8-ethylidcnetetracyclo [4, 4, 0, 1^{2.5}, 1^{7,10}] -3-dodecene, 8-chlorotetracyclo [4, 4, 0, 1^{2.5}, 1^{7.10}]-3-dodecene, 8-bromotetracyclo [4, 4, 0, 1^{2.5}, 1^{7.10}]-3-dodecene, 8-fluorotetracyclo [4, 4, 0, 1^{2.5}, 1^{7.10}]-3-dodecene, 8,9-dichlorotetracyclo [4, 4, 0, 1^{2.5}, 1^{7.10}]-3-dodecene, hexacyclo [6, 6, 1, 1^{3.6}, 1^{10.13}, 0^{2.7}, 0^{9.14}]-4-heptadecyne, 12-methylhexacyclo [6, 6, 1, 1^{3.6}, 1^{10.13}, 0^{2.7}, 0^{9.14}] -4-heptadecyne, 12-ethylhexacyclo [6, 6, 1, 1^{3.6}, 1^{10.13}, 0^{2.7}, 0^{9.14}]-4-heptadecyne, 12-isobutylhexacyclo [6, 6, 1, 1^{3.6},1^{10.13}, 0^{2.7}, 0^{9.1}₄]-4-heptadecyne, 1,6,10-trimethyl-12-isobutylhexacyclo [6, 6, 1, 1_{3.6}, 1^{10.13}, 0^{2.7}, 0^{9.14}]-4, 5-methyl-5-phenyl-bicyclo [2, 2, 1] hept-2-ene, 5-ethyl-5-phenyl-bicyclo [2, 2, 1] hept-2-ene, 5-n-propyl-5-phenyl-bicyclo [2, 2, 1] hept-2-ene, 5-n-butyl-5-phenyl-bicyclo [2, 2, 1] hept-2-ene, 5,6-dimethyl-5-phenyl-bicyclo [2, 2, 1] hept-2-ene, 5-methyl-6-ethyl-5-phenylbicyclo [2, 2, 1] hept-2-ene, 5,6,6'-trimethyl-5-phenyl-bicyclo [2, 2, 1] hept-2-ene, 1,4,5-trimethylbicyclo [2, 2, 1] hept-2-ene, 5,6-diethyl-5-phenylbicyclo [2, 2, 1] hept-2-ene, 5-bromo-5-phenyl-bicyclo [2, 2, 1] hept-2-ene, 5-chloro-5-phenyl-bicyclo [2, 2, 1] hept-2-ene, 5-fluoro-5-phenyl-bicyclo [2, 2, 1] hept-2-ene, 5-methyl-5-(tert-butylphenyl)-bicyclo [2, 2, 1] hept-2-ene, 5-methyl-5-(bromophenyl)-bicyclo [2, 2, 1] hept-2-ene, 5-methyl-5-(chlorophenyl)-bicyclo [2, 2, 1] hept-2-ene, 5-methyl-5-(fluorophenyl)-bicyclo [2, 2, 1] hept-2-ene, 5-methyl-5-(α-naphthyl)-bicyclo [2, 2, 1] hept-2-ene, 5-methyl-5-anthracenyl-bicyclo [2, 2, 1] hept-2-ene, 8-methyl-8-phenyl-tetracyclo [4, 4, 0, 1^{2.5}, 1^{7,10}]-3-dodecene, 8-ethly-8-phenyl-tetracyclo [4, 4, 0, 1^{2.5}, 1^{7.10}]-3-dodecene, 8-n-propyl-8-phenyl-tetracyclo [4, 4, 0, 1^{2.5}, 1^{7.10}]-3-dodecene, 8-n-butyl-8-phenyl-tetracyclo [4, 4, 0, 1^{2.5}, 1^{7,10}]-3-dodecene, 8-chloro-8-phenyl-tetracyclo [4, 4, 0, 1^{2.5}, 1^{7,10}]-3-dodecene, 11-methyl-11-phenyl-hexacyclo [6, 6, 1, 1^{3.6}, 1^{10.13}, 0^{2.7}, 0^{9.14}]-4-heptadecyne, 1,4-methano-4a,9,9'-trimethyl-1,4,9a-trihydrofluorene. Basically, it is possible to produce those kinds of monomers by thermal Diels-Alder reaction between corresponding dienes and olefins, and it is also possible to produce a desired monomer by, for example, adding hydrogen appropriately.

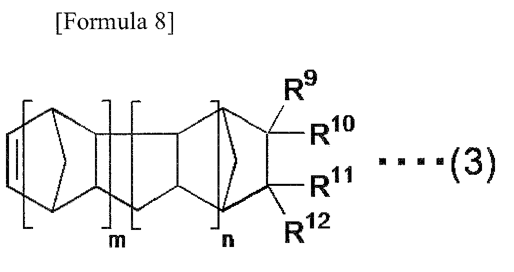

R⁹, R¹⁰, R¹¹, and R¹² in the formula (3) can be different or identical, and each of these is a substituent group containing hydrogen atoms, deuterium atoms, hydrocarbon groups having a carbon number of 1 to 15, halogen atoms, or hetero atoms, such as oxygen or sulfur, and those may mutually form a ring structure. Note that m and n are integers each greater than or equal to 0.

Moreover, an α-olefin appropriately used for the copolymer represented in the formula (1) is an α-olefin having a carbon number of 2 to 20, preferably of 2 to 10, and examples of such an α-olefin are ethylene, propylene, 1-butene, 1-pentene, 3-methyl-1-butene, 3-methyl-1-pentene, 1-hexene, 1-octene, 1-decene, and those may be used individually or combined together. Among these, ethylene or propylene is preferable, and in particular, ethylene is preferable from the standpoint of the copolymerizability, the economical efficiency, and the like in practice.

In the copolymer represented by the formula (1), a preferable molar ratio between the α-olefin and the cyclic olefin is within a range from 10/90 to 90/10, and more preferably, within a range from 30/70 to 70/30. The molar ratio in the copolymer was set using ¹³C-NMR (400 MHz, temperature: 120 °C/solvent: 1,2,4-trichlorobenzene/l, 1,2,2-deuterated-tetrachloroethane mixing system).
A weight-average molecular weight Mw of the cyclic olefin-based thermoplastic resin represented by the formula (1) or (2) is within a range from 10,000 to 1,000,000, preferably, from 20,000 to 750,000, more preferably, from 30,000 to 500,000, and a preferable resin has an MFR actual measured value from 0.1 to 200, and more preferably, from 1 to 100 at a temperature of 260 °C.

A glass-transition temperature of a resin depends on applications of a product to which a fine pattern is transferred by thermal imprinting, and it is possible to use a resin by arbitrarily adjusting the temperature thereof represented by the formula (1) or (2), but it is preferable that such a temperature should be 50 °C to 200 °C from the standpoint of thermal imprinting processes.

A method of polymerization to manufacture the resin is not limited to any particular one, and conventionally well-known methods may be applied, such as coordination polymerization using a Ziegler-Natta catalyst or a single-site catalyst, furthermore, a method of adding hydrogen to a copolymer as needed, or a method of adding hydrogen after ring-opening polymerization using a metathesis polymerization catalyst. Conventionally well-known methods also can be applied as a method of adding hydrogen, and it can be carried out more appropriately using a catalyst containing a metallic constituent, such as nickel or palladium. For example, as the single-site catalyst used for producing a copolymer represented by the formula (1), various metallocene compounds can be used, and for example, methylene (cyclopentadienyl) (tetracyclopentadienyl) zirconiumdichloride disclosed in JP2003-82017A can be appropriately used. A promoter used for a polymerization reaction is not limited to any particular one, and conventionally well-known methylaluminoxanes can be appropriately used, and it is possible to appropriately make such a promoter coexistent with other organic aluminum compounds and polymerized together in accordance with a reaction. Such a polymerization reaction can be appropriately carried out at a temperature from a room temperature to 200 °C, but it is preferable to carry out such a reaction at a temperature of 40 to 150 °C in view of the reactivity and the stability of a catalyst. An organic solvent used for a polymerization reaction is not limited to any particular one, and examples of such solvents preferably used are aromatic solvents, such as benzene, toluene, xylene, and ethylbenzene, saturated hydrocarbon solvents, such as hexane, cyclohexane, heptane, methylcyclohexane, and octane, or mixed solvents of these. After the resin is manufactured, it is also possible to appropriately introduce hetero atoms, such as oxygen atoms and sulfur atoms, by a radical reaction. Various kinds of commercially-available thermoplastic resins can be obtained and appropriately used for the purpose of the present invention.

It is possible to arbitrarily use any solvent dissolving the resin when the thermal imprinting resin solution is prepared. For example, as aromatic solvents, benzene, toluene, xylene, mesitylene, p-menthane, ethylbenzene, and diethylbenzene can be appropriately used, as hydrocarbon solvents, cyclohexane, methylcyclohexane, and decahydronaphthalene can be used appropriately, and as halogen solvents, dichloromethane, chloroform, chlorobenzene, dichlorobenzene, and trichlorobenzene can be used appropriately. These solvents can be used individually, but greater than or equal to two kinds of solvents can be appropriately combined together and used. It is possible to heat a solvent appropriately in order to dissolve the resin. It is also possible to add a tiny amount of alcohols and ketones without deteriorating the solubility of the resin for the purpose of improvement of the solubility of an additive agent. The resin concentration can be prepared arbitrarily depending on the thickness of a thin film to be manufactured, but it is preferable that the resin concentration which can be appropriately applied for thin film formation should be 0.1 % by weight to 30 % by weight.

Conventionally well-known methods, such as spin coating, solution casting (solution casting method), and dipping, can be appropriately used for a method of forming a thin film. A film thickness of the resin thin film appropriately applied to the present invention is 10 nm to 40 µm, and it is possible to appropriately transfer a fine pattern on a surface of the resin thin film by thermal imprinting processes at any film thickness.

The resin thin film can arbitrarily use various kinds of base materials, such as silicon, aluminum, copper, sapphire, glass and a resin film as a supporting base material, and it is fine if the supporting base material is peeled after a thin film is formed and the thin film is used alone. When solely used as a thin film, it is preferable that a thin film should have a film thickness greater than or equal to 20 µm.

It is possible to add or mix antioxidants, heat resisting stabilizers, weathering stabilizers, light stabilizers, antistatic agents, slipping agents, anti-blocking agents, leveling agents, antifog additives, lubricants, colorants, pigments, natural oils, synthetic oils and waxes with the resin as needed, and the combination ratio can be set appropriately without producing particles on the thin film to be formed and deteriorating the flatness thereof. Additive agents, such as antioxidants and lubricants are not limited to any particular one, and conventionally well-known compounds can be suitably used.

Transfer failure may occur in some cases if there is a foreign particle relatively larger than the film thickness on the surface of the resin thin film because it is not possible to press sufficiently such a part by a mold. Accordingly, it is fine if the resin solution is filtered through a conventionally well-known technique in order to suppress any generation of particle-like foreign materials on the surface of the resin thin film. For example, in a case in which a thin film with a thickness greater than or equal to 2 µm is formed, it becomes possible to appropriately remove foreign particles and insoluble materials in the resin solution which may trigger generation of the particle-like materials by a filtration using a filter having apertures each smaller than or equal to one-half of a thickness of the thin film to be formed. If it is desirable to suppress any particle-like materials more precisely, or if a thin film with a thickness smaller than 2 µm is formed, it becomes possible to control such formation of particle-like materials by processing the resin solution with a filter having apertures each smaller than 0.8 µm. In addition, a filter material can be changed appropriately in accordance with the kind of a solvent for a resin solution to be used. A filter without a charge capturing characteristic is also appropriate.

In a drying step after coating of a film, a normal thermal drying method can be applied appropriately. Although it is possible to manufacture a target thin film by performing reduced-pressure drying and heat drying on a thin film on a substrate, in order to suppress any foam formation derived from a solvent, it is more preferable to apply a method of pre-drying the thin film at a temperature lower than a boiling point of a solvent, and then of drying the thin film by rising the temperature. Because there is a concern for thermal degradation of the resin during the drying step, it is more preferable to perform drying under an nitrogen atmosphere or reduced pressure, but it becomes possible to perform drying treatment under an atmosphere like a hot plate if a treatment of suppressing any resin degradation is carried out by adding antioxidants and the like to the resin.

In addition, one of requisitions of a resin thin film which can be used for thermal imprinting is remaining volatile compositions in the thin film. As the thin film is formed by drying the resin solution, the thicker the film thickness becomes, the more the remaining volatile compositions are present. If there are remaining volatile compositions in the resin thin film, a foam formation phenomenon occurs on the resin thin film because the resin is heated at the time of thermal imprinting and the remaining volatile compositions are likely to vaporize. When the foam formation phenomenon occurs, the transfer precision of a pattern considerably falls down so that it becomes difficult to manufacture a target imprinting product. Consequently, it is preferable to control the remaining volatile compositions in the resin thin film to be at least less than or equal to 0.25 %, and more preferably, to be less than or equal to 0.15 %. Note that the thicker the film thickness becomes, the more the remaining volatile compositions after the drying step are present, so that it is preferable that the thickness of the thin film to be formed should be less than or equal to 40 µm as a film thickness which enables reduction of the remaining volatile compositions in the thin film appropriately. A resin thin film thus becomes one which can be appropriately used for thermal imprinting.

It is also fine to use a normal laboratory as a process environment at the time of thin-film formation, but more preferably, it is preferable to carry out the thin-film formation in a clean booth or a clean room in order to reduce the risk of contamination of foreign particles.

Various products are launched in the market as an apparatus for imprinting, and it is possible to select a model appropriately. A transfer pattern to which refinement thereof is requisite preferably has a size smaller than or equal to 10 µm, more preferably, a pattern smaller than or equal to 1 µm. In order to realize processes with a good transfer precision of a pattern, and also with an improved productivity, an imprinting condition which can reduce a cooling time if the temperature of a mold is low, and which can reduce a molding time if a molding pressure is small and a retention time is short is appropriate.

Examples of the application of such an imprint product are optical devices, such as light waveguides, light guide plates, and diffraction gratings, bio-device fields including biochips, fluidic devices, such as microcircuits and microreactors, data storage media, and circuit substrates.

### Examples

An explanation will be given of the present invention through examples, but the present invention is not limited to those examples.

Note that the weight-average molecular weight (Mw), the number-average molecular weight (Mn), and the molecular weight distribution (Mw/Mn) of the resin used were measured by gel permeation chromatography (GPC) using an GPC apparatus made by Waters under conditions that column: K-805L/K-806L made by Shodex, column temperature: 40 °C, solvent: chloroform, and fluid-path volume: 0.8 mL/minute. Moreover, the glass-transition temperature Tg (°C) of the resin used was obtained from endothermic peak at the time of temperature rising using a differential scanning calorimetric analyzer made by Seiko Instruments Inc., (type: EXSTAR6000, DSC6200). Furthermore, regarding an MFR actual measured value [M] at a temperature of 260 °C, a value measured using MELT INDEXER made by TECHNOL SEVEN Co., LTD. (type: L248-2531) with a load of 2.16 kgf was adopted.

### <Preparation of Resin Solution>

### <First Example>

In a flask container dried and having undergone nitrogen substitution, 4 pts.wt. of a resin powder A (ethylene/norbornene-based copolymer, MFR @ 260 °C: 12.9, Mw: 122,500, Tg: 135 °C), and 0.004 pts.wt. of an antioxidant (IRGANOX1010 made by Ciba Specialty Chemicals corporation) were stirred and dissolved into 96 pts.wt. of decahydronaphthalene at a room temperature, filtrated by a nylon-made filter (PhotoShield N made by CUNO corporation) having pores each diameter of which was 0.04 µm, and thus a resin solution for thermal imprinting was prepared.

### <First Comparative Example>

A thermal-imprinting resin solution was prepared through the same fashion and from the same resin except that filtration by a nylon-made filter (PhotoShield N made by CUNO corporation) having pores each diameter of which was 0.04 µm of the first example was omitted.

### <Second Comparative Example>

A thermal-imprinting resin solution was prepared through the same fashion and from the same resin except that filtration by a nylon-made filter (LIFE ASSURE made by CUNO corporation) having pores each diameter of which was 0.8 µm of the first example was omitted.

### <Second Example>

A thermal-imprinting resin solution was prepared through the same fashion and from the same resin except that the combination amount of the antioxidant (IRGANOX1010 made by Ciba Specialty Chemicals corporation) of the first example was changed to 0.012 pts.wt..

### <Third Example>

A thermal-imprinting resin solution was prepared through the same fashion and from the same resin except that filtering using a PTFE-made filter (made by ADVANTEC corporation) having pores each diameter of which was 0.50 µm was performed in the second example.

### <Fourth Example>

A thermal-imprinting resin solution was prepared through the same fashion and from the same resin except that the combination amount of the antioxidant (IRGANOX1010 made by Ciba Specialty Chemicals corporation) in the first example was changed to 0 pts.wt..

### <Fifth Example>

A thermal-imprinting resin solution was prepared through the same fashion and from the same resin except that the solvent in the first example was replaced with diethylbenzene.

### <Sixth Example>

In a flask container dried and having undergone nitrogen substitution, 4 pts.wt. of a commercially-available thermoplastic resin pellet B (ethylene/norbornene-based copolymer, MFR @ 260 °C: 30, Tg: 80 °C), and 0.004 pts.wt. of an antioxidant (IRGANOX1010 made by Ciba Specialty Chemicals corporation) were stirred and dissolved into 96 pts.wt. of decahydronaphthalene at a room temperature, filtrated by a nylon-made filter (PhotoShield N made by CUNO corporation) having pores each diameter of which was 0.2 µm, and the filtered solution was further filtrated by a nylon-made filter (PhotoShield N made by CUNO corporation) having pores each diameter of which was 0.04 µm, and thus a thermal-imprinting resin solution was prepared.

### <Seventh Example>

A thermal-imprinting resin solution was prepared through the same fashion except that the commercially-available resin pellet B and the solvent combination amount in the sixth example were changed to a 3 pts.wt. of commercially-available resin pellet B and a 97 pts.wt. of decahydronaphthalene.

### <Eighth Example>

In a flask container dried and having undergone nitrogen substitution, 4 pts.wts of a commercially-available thermoplastic resin pellet C (ring-opening polymer/hydrogenation body, MFR @ 260 °C: 7.3, Tg: 136 °C) was stirred and dissolved into 96 pts.wt. of decahydronaphthalene at a room temperature, filtrated by a nylon-made filter (PhotoShield N made by CUNO corporation) having pores each diameter of which was 0.2 µm, and the filtered solution was further filtrated by a nylon-made filter (PhotoShield N made by CUNO corporation) having pores each diameter of which was 0.04 µm, and thus a thermal-imprinting resin solution was prepared.

### <Ninth Example>

A thermal-imprinting resin solution was prepared through the same fashion and from the same resin except that the solvent of the eighth example was replaced with diethylbenzene.

### <Evaluation for Particles in Thermal-Imprinting Resin Solution>

With regard to the thermal-imprinting resin solutions prepared in the first and second examples, and the first comparative example, particle-diameter distribution contained in the solutions was measured by a liquid-borne particle counter (KS-40B made by RION Co., Ltd.), and a number of particles greater than or equal to 0.2 µm per 1 cm³ of solution was shown in the table 1.

**[Table 1]**

| Thermal-Imprinting resin Solution | Number of Particles with Diameter greater than or equal to 0.2 µm (piece/1 cm³) |
|---|---|
| First Example | 7.4 |
| Second Example | 22.1 |
| First Comparative Example | 3 × 10³ |

### <Evaluation for Particles in Thermal-Imprinting Resin Thin Film>

The thermal-imprinting resin solutions of the first to the ninth examples were applied on respective 4-inch silicon wafers using a spin coater (SC-300 made by EHC corporation) under a spin coat condition of 400 rpm × 5 sec + 4000 rpm × 20 sec, the solvents were removed by drying by heating and thermal-imprinting resin thin films were produced (tenth to eighteenth examples). Moreover, a thermal-imprinting resin thin film was produced on a glass substrate by solution casting using the resin solution of the second example (nineteenth example). For comparison, thin films were produced through the same fashion using the thermal-imprinting resin solutions of the first and second comparative examples (third and fourth comparative examples).

Following three kinds of methods were adopted as drying by heating.

First drying by heating (vacuum drying): Under nitrogen gas streams, a wafer was pre-dried at a temperature of 100 °C for 10 minutes, put into an vacuum heating and drying apparatus, was subjected to pressure reduction to less than or equal to 1 torr at a room temperature, the temperature was raised to 200 °C, and the wafer was held in a reduced pressure condition for 20 minutes. The wafer was cooled down to a room temperature with the interior of the heating and drying apparatus being maintained in a vacuum condition to less than or equal to 1 torr, depressurized by nitrogen, and the wafer coated with the resin thin film was pulled out.

Second drying by heating (hot air circulation drying): In an hot air circulation drying apparatus under nitrogen gas streams, a wafer was pre-dried at a temperature of 100 °C for 10 minutes, subjected to actual drying at a temperature of 200 °C for 30 minutes, thermally-annealed for 30 min at a temperature of the glass-transition temperature of the resin + 10 °C, and the wafer coated with the resin thin film was pulled out.

Third drying by heating (hot plate drying): On a hot plate in atmosphere, a wafer was pre-dried at a temperature of 100 °C for 10 minutes, subjected to actual drying at a temperature of 200 °C for 30 minutes, thermally-annealed for 30 min at a temperature of the glass-transition temperature of the resin + 10 °C, the wafer coated with the resin thin film was pulled out.

Note that a film thickness was measured using an automatic ellipsometer (MARY-102FM) made by Five Lab corporation. Moreover, a resin surface after thin film formation was observed by a microscope (VH-X450) made by KEYENCE corporation, and when no particle-like material was observed, it is indicated in table 2 with a circular mark, and when such particle-like materials were significantly observed, it is indicated in the table with a cross mark (table 2).

**[Table 2]**

| Resin Thin Film | Thermal-Imprinting Resin Solution | Drying by Heating | Resin Film Thickness (nm) | Evaluation for Particles on Thin Film |
|---|---|---|---|---|
| Tenth Example | First Example | Second Drying by Heating | 115 | ○ |
| Eleventh Example | Second Example | Third Drying by Heating | 115 | ○ |
| Twelfth Example | Third Example | First Drying by Heating | 114 | ○ |
| Thirteenth Example | Fourth Example | First Drying by Heating | 115 | ○ |
| Fourteenth Example | Fifth Example | First Drying by Heating | 68 | ○ |
| Fifteenth Example | Sixth Example | First Drying by Heating | 113 | ○ |
| Sixteenth Example | Seventh Example | First Drying by Heating | 76 | ○ |
| Seventeenth Example | Eighth embodiment | Second Drying by Heating | 127 | ○ |
| Eighteenth Example | Ninth Example | Second Drying by Heating | 102 | ○ |
| Nineteenth Example | Second Example | Second Drying by Heating | 4000 | ○ |
| Third Comparative Example | First Comparative Example | First Drying by Heating | 115 | × |
| Fourth Comparative Example | Second Comparative Example | First Drying by Heating | 114 | × |

### <Evaluation for Thermal Deterioration of Thermal-Imprinting Resin Thin Film>

For evaluation for thermal deterioration of the resin thin films which were formed on respective 4 inch silicon wafers or glass substrates and which were subjected to drying by heating, 3 µL of pure water was dropped on the thin films, and contact angles thereof were measured. In order to evaluate any effects of a drying condition, a fifth comparative example in which only the drying condition in the manufacturing conditions of the thirteenth example was changed to the third drying by heating was evaluated. Contact angles were measured using an contact angle measuring apparatus (FAMAS) made by Kyowa Interface Science Co., Ltd. Moreover, for evaluation for thermal deterioration of the resin thin films, a resin thin film formed on a silicon wafer or a glass substrate was re-dissolved by rinsing with toluene at a room temperature, and when no toluene insoluble material or particle-like material was observed, it is indicated in table 3 with a circular mark, and when such materials were observed, it is indicated in the table with a cross mark (table 3).

**[Table 3]**

| Resin Thin Film | Drying by Heating | Resin Film Thickness (nm) | Contact Angle (Degree) | Re-dissolving of Thin Film with Toluene |
|---|---|---|---|---|
| Tenth Example | Second Drying by Heating | 115 | 99 | ○ |
| Eleventh Example | Third Drying by Heating | 115 | 98 | ○ |
| Twelfth Example | First Drying by Heating | 114 | 98 | ○ |
| Thirteenth Example | First Drying by Heating | 115 | 99 | ○ |
| Fourteenth Example | First Drying by Heating | 68 | 98 | ○ |
| Fifteenth Example | First Drying by Heating | 113 | 99 | ○ |
| Sixteenth Example | First Drying by Heating | 76 | 99 | ○ |
| Seventeenth Example | Second Drying by Heating | 127 | 98 | ○ |
| Eighteenth Example | Second Drying by Heating | 102 | 98 | |
| Nineteenth Example | Second Drying by Heating | 4000 | 97 | ○ |
| Third Comparative Example | First Drying by Heating | 115 | * Unmeasurable | × (Particle-Like Materials Present) |
| Fifth Comparative Example | Third Drying by Heating | 115 | 89 | × (Insoluble Contents Present) |

| | | | | |
|---|---|---|---|---|
| * Unmeasurable: due to larger dispersion of measured values of water contact angle than particle-like materials on thin film surface, quantitative evaluation was not possible. | | | | |

### <Evaluation for Thermal-Imprinting on Thermal-Imprinting Resin Thin Film>

A thin film manufactured under the thin film manufacturing conditions of the nineteenth example except that the drying time thereof was reduced was evaluated as a sixth comparative example (dried at a temperature of 200 °C for 10 minutes).
Evaluation for thermal imprinting was carried out using the thin films of the tenth, eleventh, thirteenth to sixteenth, and nineteenth examples, and of third, fifth, and sixth comparative examples. The evaluation for thermal imprinting was carried out using an imprinting apparatus (VX-2000N-US) made by SCIVAX corporation, and each of the thin films was fixed on a substrate heated at a temperature of the glass-transition temperature Tg of the corresponding resin - 20 °C, and then thermal imprinting was performed thereon using a mold (hole pattern with depth 140 nm/diameter 100 to 250 nm or honeycomb pattern with depth 370 nm/wall width 250 nm/2 mm of a side) heated at a temperature of molding preset temperature Tg + 30 °C beforehand, and when the pattern of the mold was precisely transferred, it is indicated in table 4 with a circular mark, and when the transfer precision of the pattern was poor, it is indicated in the table with a cross mark (table 4). Moreover, with regard to remaining volatile compositions in the resin thin film, the thin film was re-dissolved with toluene, and the remaining volatile compositions were analyzed and quantified through gas chromatography.

**[Table 4]**

| Resin Thin Film | Resin Film Thickness (nm) | Remaining Volatile Composition (ppm) | Evaluation for Thermal Imprinting |
|---|---|---|---|
| Tenth Example | 115 | <10 | ○ |
| Eleventh Example | 115 | <10 | ○ |
| Thirteenth Example | 115 | <10 | ○ |
| Fourteenth Example | 68 | <10 | ○ |
| Fifteenth Example | 113 | <10 | ○ |
| Sixteenth Example | 76 | <10 | ○ |
| Nineteenth Example | 4000 | 1545 | ○ |
| Third Comparative Example | 115 | <10 | × |
| Fifth Comparative Example | 115 | <10 | × |
| Sixth Comparative Example | 4000 | 2800 | × |

| | | | |
|---|---|---|---|
| Note that in the table, [< 10] means less than 10 ppm. | | | |

Note that in the case of a mold pattern having a pattern depth larger than the thin film thickness, it was confirmed that a pattern with a height direction larger than an actual film thickness can be formed because the resin pressed by the mold at the time of imprinting runs into the pattern.

In the third comparative example, a theimal-imprinting defective part originating from particle-like materials was confirmed, and in the fifth comparative example, a thermal-imprinting defective part originating from insoluble materials and mold contamination were confirmed. In the sixth comparative example, no transferring of a pattern was accomplished at all because the thin film was foamed at the time of thermal imprinting. The foregoing results suggest that in order to carry out thermal imprinting appropriately, it is necessary that the remaining volatile compositions in the thin film is at least less than or equal to 0.25 %, preferably, less than or equal to 0.15 %.
It was possible to form the thermal-imprinting resin thin film which was able to cope with various drying by heating and which had little thermal deterioration by adjusting the type of the resin, and the combination amount of the antioxidant thereto.

As explained above, according to the present invention, it was possible to provide a thermal-imprinting resin solution and a thin film thereof appropriately applicable to thermal imprinting processes.

## Claims

1. A thermal-imprinting resin solution for forming a thin film used for thermal imprinting, the thermal-imprinting resin solution comprising:
a thermoplastic resin; and
greater than or equal to at least one kind of solvent which can dissolve the thermoplastic resin, and wherein
an containing amount of foreign particles each having a grain diameter larger than or equal to 0.2 µm is less than 3000 particles/cm³.

2. A thermal-imprinting resin solution for forming a thin film used for thermal imprinting, the thermal-imprinting resin solution comprising:
a thermoplastic resin containing at least one kind of skeleton in a formula (1) or in a formula (2) in a main chain; and
greater than or equal to at least one kind of solvent which can dissolve the thermoplastic resin, and wherein
an containing amount of foreign particles each having a grain diameter larger than or equal to 0.2 µm is less than 3000 particles/cm³. 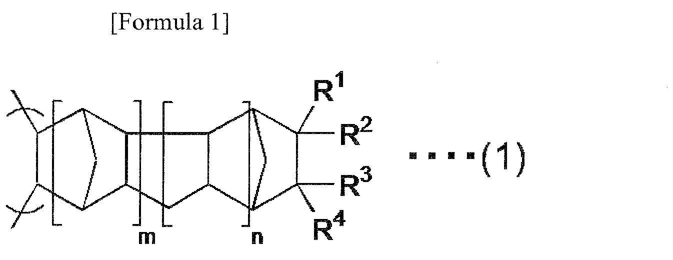 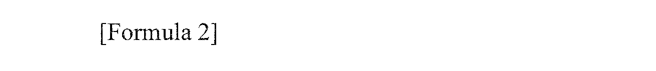 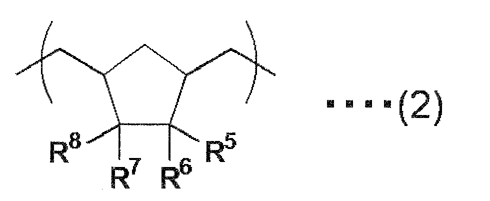 (R¹, R², R³, R⁴, R⁵, R⁶, R⁷, and R⁸ in the formulae (1), (2) can be different or identical, and each of these is a substituent group containing hydrogen atoms, deuterium atoms, hydrocarbon groups having a carbon number of 1 to 15, halogen atoms, or hetero atoms, such as oxygen or sulfur, and those may mutually form a ring structure. m and n are integers greater than or equal to 0)

3. A thermal-imprinting resin solution for forming a thin film used for thermal imprinting, the thermal-imprinting resin solution comprising:
a thermoplastic resin; and
greater than or equal to at least one kind of solvent which can dissolve the thermoplastic resin, and wherein
the resin solution is acquired by filtration using a filter having apertures each smaller than 0.8 µm.

4. The thermal-imprinting resin solution according to any one of claims 1 to 3, wherein the thermoplastic resin is a copolymer of cyclic olefin in a formula (3) and α-olefin, or a polymer produced by hydrogenation after ring-opening polymerization of the cyclic olefin. 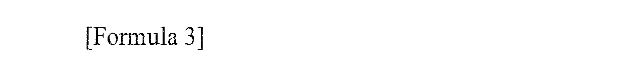 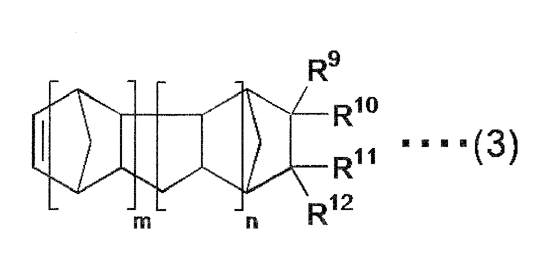 (R⁹, R¹⁰, R¹¹, and R¹² in the formula (3) can be different or identical, and each of these is a substituent group containing hydrogen atoms, deuterium atoms, hydrocarbon groups having a carbon number of 1 to 15, halogen atoms, or hetero atoms, such as oxygen or sulfur, and those may mutually form a ring structure. m and n are integers greater than or equal to 0)

5. The thermal-imprinting resin solution according to any one of claims 1 to 3, wherein the solvent is one kind selected from followings: an aromatic solvent; a hydrocarbon solvent; and a halogen solvent, or is a mixed solvent of greater than or equal to two kinds of these solvents.

6. A method of manufacturing a thermal-imprinting resin solution for forming a thin film used for thermal imprinting, the method comprising:
dissolving a thermoplastic resin in greater than or equal to at least one kind of solvent which can dissolve the thermoplastic resin, and;
filtrating the solvent using a filter having apertures each smaller than 0.8 µm.

7. A method of manufacturing a thermal-imprinting resin solution for forming a thin film used for thermal imprinting, the method comprising:
dissolving a thermoplastic resin in greater than or equal to at least one kind of solvent which can dissolve the thermoplastic resin, the thermoplastic resin containing at least one kind of skeleton in a formula (1) or in a formula (2) in a main chain; and
filtrating the solvent using a filter having apertures each smaller than 0.8 µm. 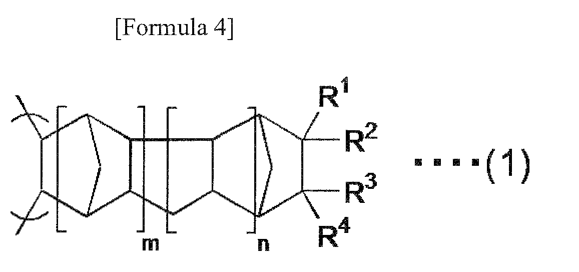 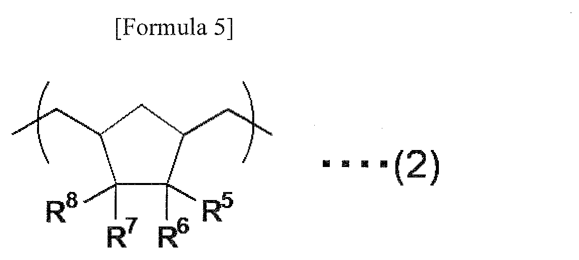 (R¹, R², R³, R⁴, R⁵, R⁶, R⁷, and R⁸ in the formulae (1), (2) can be different or identical, and each of these is a substituent group containing hydrogen atoms, deuterium atoms, hydrocarbon groups having a carbon number of 1 to 15, halogen atoms, or hetero atoms, such as oxygen or sulfur, and those may mutually form a ring structure. m and n are integers greater than or equal to 0)

8. The thermal-imprinting-resin-solution manufacturing method according to claim 7, wherein the thermal-imprinting resin solution contains the thermoplastic resin in the formula (1) or in the formula (2) at 0.1 % by weight to 30 % by weight.

9. The thermal-imprinting-resin-solution manufacturing method according to claim 6 or 7, wherein the solvent is one kind selected from followings: an aromatic solvent; a hydrocarbon solvent; and a halogen solvent, or is a mixed solvent of greater than or equal to two kinds of these solvents.

10. A thermal-imprinting resin thin film manufactured using the thermal-imprinting resin solution according to any one of claims 1 to 3.

11. The thermal-imprinting resin thin film according to claim 10, wherein remaining volatile compositions are less than or equal to 0.25 %.

12. The thermal-imprinting resin thin film according to claim 10, wherein a film thickness is 10 nm to 40 µm.

13. A method of manufacturing a thermal-imprinting resin thin film, the method comprising:
applying the thermal-imprinting resin solution according to any one of claims 1 to 3 on a supporting base material; and
drying the resin solution until remaining volatile compositions become less than or equal to 0.25 %.

14. The thermal-imprinting-resin-solution-thin-film manufacturing method according to claim 13, wherein a film thickness of the thin film is 10 nm to 40 µm.

15. The thermal-imprinting-resin-solution-thin-film manufacturing method according to claim 13, wherein a film thickness of the thin film is 10 to 4000 nm, and the resin is applied by spin coating.
